# EUROPÄISCHE PATENTSCHRIFT

(11) **EP 2 000 508 B1**
(45) Veröffentlichungstag und Bekanntmachung des Hinweises auf die Patenterteilung: **22.09.2010**
(21) Anmeldenummer: 08009668.8
(22) Anmeldetag: 28.05.2008
(51) Int. Cl.: C08L 97/02

(54) **Verfahren zur Herstellung eines leichten flexiblen Formkörpers auf der Basis von lignocellulosehaltigen Fasern**
Method for producing a lightweight flexible moulded article based on lignocellulose containing fibres
Procédé de fabrication d'un corps de formage léger et flexible à base de fibres contenant de la lignocellulose

(30) Priorität: 02.06.2007 DE 102007025801
(43) Veröffentlichungstag der Anmeldung: 10.12.2008
(73) Patentinhaber: GLUNZ AG, 49716 Meppen (DE)
(72) Erfinder: Jeske, Hauke, 25770 Hemmingstedt (DE); Pfemeter, Alfred, Dr., 49716 Meppen (DE)
(74) Vertreter: Rehberg Hüppe + Partner

(56) Entgegenhaltungen:
- EP-A- 0 911 453
- EP-A- 1 110 687
- DE-A1- 2 711 958
- DE-A1- 10 338 007
- DE-U1- 29 900 621

## Beschreibung

### TECHNISCHES GEBIET DER ERFINDUNG

Die Erfindung betrifft ein Verfahren zur Herstellung eines leichten Formkörpers auf der Basis von Lignocellulose haltigen Fasern mit den Schritten des Oberbegriffs des Patentanspruchs 1 sowie auf einen Formkörper auf der Basis von Lignocellulose haltigen Fasern mit den Merkmalen des Oberbegriffs des Patentanspruchs 9.

### STAND DER TECHNIK

Ein Verfahren zur Herstellung eines leichten Formkörpers auf der Basis von Lignocellulose haltigen Fasern, wobei eine PMDI-Komponente und eine Polyolkomponente auf die Fasern aufgebracht werden und wobei die PMDI-Komponente mit der Polyolkomponente und der Lignocellulose reagiert wird, um die Fasern miteinander zu verbinden, sowie eine entsprechend hergestellte Faserplatte sind aus der EP 1 110 687 A1 bekannt. Hier wird aus der PMDI-Komponente und der Polyolkomponente ein PUR-Bindemittel ausgebildet, das so reagiert, dass Hohlräume zwischen den zu verbindenden Fasern durch einen PUR-Schaum ausgefüllt werden. So werden formstabile Faserplatten hergestellt, deren mittlere Rohdichte 60 bis 250 kg/m³ beträgt, wobei ein Rohdichteprofil der Faserplatten eine Randüberhöhung der Rohdichte gegenüber der mittleren Rohdichte von mindestens 20 % aufweist.

Eine besonders geringe Dichte von Formkörpern auf der Basis von Lignocellulose haltigen Fasern ist von besonderem Interesse, wenn die Formkörper zur Wärmedämmung eingesetzt werden sollen. Hierfür kommen nicht nur formstabile Formkörper, beispielsweise in Form von Platten, in Frage. Bekannt sind auch sogenannte Holzfasergefachdämmungen, die zur Wärmedämmung in Gefache von hölzernen Baukonstruktionen eingebracht werden und sich dabei vorzugsweise elastisch an die seitlichen Begrenzungen der Gefache anlegen, um eine randschlüssige Wärmedämmung zu erreichen.

Es sind Holzfasergefachdämmungen bekannt, bei denen die Holzfasern neben dem Bindemittel mit Polyolefinfasern vermischt werden, die als Stützfasern dienen, welche die Holzfasern zusammenhalten und elastisch aneinander abstützen.

Es ist auch bekannt, elastische Holzfasergefachdämmungen herzustellen, bei denen die Holzfasern durch textile Bindefasern aus Maisstärke untereinander verbunden sind.

Ein Verfahren und eine Faserplatte mit den Merkmalen des Oberbegriffs des Patentanspruchs 1 bzw. 15 sind aus der DE 196 04 575 A1 bekannt. Hier soll das hochmolekulare lineare Polyol, zu dessen Molmasse keine näheren Angaben gemacht werden, hinzugefügt werden, um eine Platte mit besonders guten elastischen Eigenschaften herzustellen. Bei den Platten, die auf diese Weise verbessert werden sollen, handelt es sich um solche mit einer mittleren Rohdichte im Bereich von 700 kg/m³.

Die DE 25 38 999 beschreibt eine Bindemittelkomponente für PU-Bindemittel und deren Verwendung, wobei die Bindemittelkomponente aus einer kolloidalen Lösung eines oder mehrerer, im Reinzustand mischbarer oder nicht mischbarer Polyole und ggf. Netzmitteln und/oder Stabilisatoren in einem flüssigen Medium besteht. Die Bindemittelkomponente soll zum Verbinden von teilchenförmigen Stoffen zusammen mit einem Polyisocyanat verwendet werden. Beschrieben werden Spanplatten und andere Pressteile.

Aus der DE 197 56 154 C1 ist ein Formkörper aus Holzteilchen und PU-Bindemitteln sowie ein Verfahren zu dessen Herstellung bekannt. Der Formkörper ist durch die Reaktion mindestens eines Polyisocyanats mit mindestens einem Polyol und/oder Polyamin und mindestens einer Carbonsäure als Treibmittel herstellbar. Zu den Endeigenschaften des Formkörpers zählen hohe Festigkeitswerte und Elastizität. Der Formkörper soll zwar als Leichtbaustoff geeignet sein, er weist aber auch dabei eine Dichte von 400 bis 1000 kg/m³ auf.

Aus der DE 38 25 320 A1 ist ein Verfahren zur Herstellung von Presswerkstoffen durch Verpressen von Substrat mit Bindemitteln auf Basis von Polyisocyanaten bekannt, bei dem ebenfalls eine Polyolkomponente zum Einsatz kommt. Die Presswerkstoffe weisen eine mittlere Rohdichte oberhalb 600 kg/m³ auf.

### AUFGABE DER ERFINDUNG

Der Erfindung liegt die Aufgabe zugrunde, ein Verfahren zur Herstellung von leichten Formkörpern auf der Basis von Lignocellulose haltigen Fasern und einen solchen Formkörper aufzuzeigen, die bei geringer Rohdichte zu einer Elastizität des Formkörpers führen, was seine vorteilhafte Verwendung als Holzfasergefachdämmung ermöglicht. Dabei soll der Einsatz zusätzlicher Stützfasern vermieden und die Verbundstabilität bekannter PMDI-gebundener Verbundkörper beibehalten bleiben.

### LÖSUNG

Die Aufgabe wird erfindungsgemäß durch ein Verfahren mit den Merkmalen des Patentanspruchs 1 und durch einen Formkörper mit den Merkmalen des Patentanspruchs 9 gelöst. Bevorzugte Ausführungsbeispiele des neuen Verfahrens sind in den abhängigen Patentansprüchen 1 bis 8 definiert. Die abhängigen Patentansprüche 10 bis 15 betreffen bevorzugte Ausführungsbeispiele des neuen Formkörpers.

### BESCHREIBUNG DER ERFINDUNG

Bei dem neuen Verfahren weist die Polyolkomponente, die neben der PMDI-Komponente auf die Fasern aufgebracht wird, um sie mit der PMDI-Komponente und der Lignocellulose zum Zwecke des Verbindens der Fasern zu reagieren, mindestens ein bi-, tri- oder tetrafunktionelles Polymer. Dieses Polymer ist ein Polypropylenoxid oder ein Copolymer von Ethylenoxid und Propylenoxid und im Wesentlichen linear, indem es mindestens einen linearen Abschnitt mit einer Molmasse von mindestens 800 aufweist. Ein bifunktionelles Polymer besteht ausschließlich aus einem solchen linearen Abschnitt. Ein tri- oder tetrafunktionelles Polymer weist einen drei- oder vierarmigen oder zwei dreiarmige Verzweigungspunkte auf. Hieran schließt sich in mindestens einer Richtung der lineare Abschnitt mit der Molmasse von mindestens 800 an. Dabei sorgt das Polypropylenoxid bzw. der Einbau des Propylenoxids in das Copolymer dafür, dass das Polymer trotz seiner relativ hohen Gesamtmolmasse in flüssiger Form zur Verfügung steht und so gleichmäßig über die Fasern verteilt werden kann. Die relativ geringe Funktionalität des Polymers, die nur an den Enden relativ langer linearer Abschnitte gegeben ist, führt dazu, dass bei dem neuen Verfahren kein Schaum mit einem Netzwerk aus direkt untereinander vernetzten Polyolen gebildet wird, sondern vielmehr einzelne elastische lineare Verbindungen zwischen den Fasern hergestellt werden. Hierdurch wird für eine Flexibilität des gesamten nach dem neuen Verfahren hergestellten Formkörpers mit der mittleren Rohdichte von nicht mehr als 60kg/m³ gesorgt.

Bei dem neuen Verfahren ist es günstig, wenn das Polymer nur bifunktionell ist, das heißt ausschließlich aus einem einzigen linearen Abschnitt besteht. Dabei bedeutet linear hier nicht geradlinig, insbesondere weil das Propylenoxid gerade dazu genutzt wird, eine nicht gerade Struktur und damit eine reduzierte Viskosität auch bei höheren Gesamtmolmassen zu erreichen. Mit linear ist vielmehr gemeint, dass das Polymer in dem betrachteten Bereich keine Verzweigung zu weiteren funktionellen Enden aufweist.

Vorzugsweise weist jeder lineare Abschnitt des Polymers eine mittlere Molmasse größer als 800, vorzugsweise größer als 1600 auf. Das heißt bei einem bifunktionellen Polymer ist die Gesamtmolmasse des Copolymers größer als 800, vorzugsweise größer als 1600. Bei einem trifunktionellen Copolymer beträgt die Molmasse mindestens 2400, so dass jeder von dem Verzweigungspunkt ausgehende lineare Abschnitt die Bedingungen an die mittlere Molmasse erfüllt. Entsprechend verhält es sich bei tetrafunktionellen Copolymeren, deren mittlere Molmasse insgesamt mindestens 3200 beträgt.

Das Verhältnis, in dem Ethylenoxid und Propylenoxid in dem Copolymer vorliegen, liegt typischerweise in dem Bereich von 1:1-5:1, vorzugsweise bei 2:1. Es ist aber auch möglich, dass nur ein einziges Propylenoxid in das Copolymer eingebaut ist. Das alternativ zu dem Copolymer für die Polyolkomponente einsetzbare Polypropylenoxid besteht hingegen nur aus Propylenoxiden.

Neben dem Copolymer kann die Polyolkomponente bei dem neuen Verfahren mindestens ein reines Ethylenoxidpolymer mit einer mittleren Molmasse kleiner als 1000, vorzugsweise kleiner als 500 aufweisen. Wenn die angegebenen mittleren Molmassen überschritten werden, wird das Ethylenoxidpolymer zu sehr viskos, um es gleichmäßig über die Fasern verteilen zu können. Es stellt angesichts seiner kleineren Molmasse auch nicht die besonders vorteilhaften sehr langen Verbindungen zwischen den einzelnen Fasern her. Dennoch kann es als sinnvolle Ergänzung und/oder kostengünstiges Substitut für einen Teil des Copolymers von Ethylenoxid und Propylenoxid verwendet werden.

Das Aufbringen der PMDI-Komponente und der Polyolkomponente erfolgt bei dem gattungsbildenden Stand der Technik gemäß der EP 111 0 687 A1 so, dass zunächst die Polyolkomponente auf die Fasern aufgebracht wird, bevor dann direkt vor dem Heißverpressen der Platten die PMDI-Komponente aufgebracht wird. Bei dem neuen Verfahren wird vorzugsweise umgekehrt vorgegangen, so dass zuerst die PMDI-Komponente und dann unmittelbar vor der Reaktion mit der PMDI-Komponente die Polyolkomponente auf die Fasern aufgebracht wird.

Um die PMDI-Komponente mit der Polyolkomponente und der Lignocellulose definiert auszureagieren, kann bei dem neuen Verfahren Wärme zugeführt werden. Dies kann weniger gut durch Kontakt mit den Oberflächen des gewünschten Formkörpers geschehen, weil sich dabei seine an sich gewünschte geringe Wärmeleitfähigkeit sehr negativ auswirken würde. So ist es bevorzugt, ein angewärmtes Gas, wozu hier insbesondere auch Wasserdampf zählt, durch die mit der PMDI-Komponente und der Polyolkomponente versetzten Fasern zu führen, um den notwendigen Wärmeeintrag zu bewirken.

Konkret kann das angewärmte Gas durch durchbrochene Begrenzungsflächen für die mit der PMDI-Komponente und der Polyolkomponente versetzten Fasern hindurch eingeblasen werden. Diese Begrenzungsflächen geben dabei die Form des beim Reagieren der PMDI-Komponente mit der Polyolkomponente und der Lignocellulose entstehenden Formkörpers vor.

Bei dem erfindungsgemäßen Verfahren können Additive eingesetzt werden, wie sie grundsätzlich bekannt sind, um Polyurethan-Systeme an ihren jeweiligen Anwendungsfall anzupassen. Hierzu zählen Initiatoren, Katalysatoren, Verzögerer, Schäumungshilfsmittel und Entschäumer. Von besonderem Interesse für die vorliegende Erfindung sind dabei Initiatoren und Katalysatoren. So kann der PMDI-Komponente und/oder der Polyolkomponente ein Initiator zugesetzt, oder ein Initiator kann separat auf die Fasern aufgebracht werden, der bereits bei niedriger Temperatur, wie beispielsweise Raumtemperatur, mit der PMDI-Komponente reagiert, das heißt eine sehr hohe Reaktivität besitzt. Aus der Reaktion des Initiators mit dem PMDI wird Energie frei, die die Temperatur in der Fasermatte oder irgendeiner anderen Vorform des angestrebten Formkörpers erhöht. Hierdurch kann eine weitere Zwischenstufe oder direkt die Reaktion der PMDI-Komponente mit der Polyolkomponente ausgelöst werden.

Ein Initiator oder auch ein Katalysator, der die Reaktivität der PMDI-Komponente auf diese Weise erhöht, kann bei dem erfindungsgemäßen Verfahren zum Beispiel dazu genutzt werden, den angestrebten Formkörper in einem Hohlraum auszubilden, in den die Fasern mit der PMDI-Komponente, der Polyolkomponente und dem Initiator und/oder Katalysator eingeblasen werden, ohne dass dabei die Temperatur der Fasern signifikant über beispielsweise die Raumtemperatur erhöht wird. So kann der Formkörper direkt am Ort seines Einsatzes, beispielsweise in einem zu isolierenden Gefach, ausgebildet werden. Dies ist ein großer Vorteil bei Gefachen, die nicht ganzflächig zugänglich sind, um im Wesentlichen formsteife Formkörper einzubringen.

Auch der Zusatz von Wasser kann eine Vorreaktion der PMDI-Komponente auslösen, um die für die Reaktion der PMDI-Komponente mit der Polyolkomponente benötigte Wärme bereitzustellen.

Überraschenderweise hat sich herausgestellt, dass das neue Verfahren nach dem Reagieren der PMDI-Komponente mit der Polyolkomponente und der Lignocellulose durch einen zusätzlichen Stauchungsschritt ergänzt werden kann, der die Elastizität des hergestellten Formkörpers erhöht. Wenn der Formkörper nach der Reaktion der PMDI-Komponente vorübergehend um mindestens 25 %, vorzugsweise um mindestens 50 % seines Ausgangsvolumens gestaucht wird, ergibt sich eine deutliche Steigerung der Elastizität, obwohl auch eine gewisse Steigerung der Dichte des Formkörpers eintritt. Man mag sich diesen Effekt so erklären, dass bei der Stauchung weniger elastische Verbindungen zwischen den Fasern aufgebrochen werden und nur noch die elastischen Verbindungen über die langen linearen Abschnitte des Copolymers Bestand haben.

Das neue Verfahren ist zur Herstellung von definierten Formkörpern nicht darauf angewiesen, dass bei deren Rohdichteprofil eine Randüberhöhung eingestellt wird. Vielmehr kann zugunsten einer insgesamt geringen mittleren Rohdichte eine weitestgehend homogene Rohdichteverteilung des Formkörpers mit einer Randüberhöhung von nicht mehr als 10 % gegenüber der mittleren Rohdichte des Formkörpers eingestellt werden. Hierzu darf beim Reagieren der PMDI-Komponente mit der Polyolkomponente und der Lignocellulose keine größere Presskraft auf die Fasern ausgeübt werden.

Wenn derartige äußere Kräfte so weit wie möglich vermieden werden, ist eine mittlere Rohdichte des Formkörpers nicht mehr als 50 kg/m³, vorzugsweise von sogar nicht mehr als 35 kg/m³ am meisten bevorzugt von weniger als 30 kg/m³ erreichbar.

Hierfür muss allerdings auch ein die Fasern aufschließender Refiner auf solche Betriebsparameter eingestellt werden, dass er die Fasern mit einer minimalen Schüttdichte bereitstellt. Hierzu dürfen die aufgeschlossenen Fasern weder zu fein noch zu grob sein.

Der durch das neue Verfahren herstellbare neue Formkörper weist flexible Verbindungen zwischen seinen Lignocellulose haltigen Fasern auf, in die die linearen Abschnitte des Polymers mit der Molmasse von mindestens 800 eingebaut sind.

Die bevorzugten Merkmale des neuen Verfahrens schlagen sich in bevorzugte Merkmale des neuen Formkörpers nieder. Daneben ist darauf zu verweisen, dass der neue Formkörper in der Regel offenporig ist, aber dennoch ein gutes Lufthaltevermögen aufweist, das heißt einen durchaus hohen Strömungswiderstand z. B. für Luft.

Die mittlere Rohdichte des neuen Formkörpers kann so gering gehalten werden, dass sie nicht größer als das 1,1-fache der Summe aus der Schüttdichte der Fasern und dem Gewichtsanteil der zugesetzten PMDI-und Polyolkomponenten ist.

Wenn dem neuen Formkörper übliche Additive, wie beispielweise Brandschutzmittel, Fungizide oder der gleichen zugesetzt werden, sind diese bei der Beurteilung seiner Rohdichte gesondert zu betrachten, d. h. herauszurechnen.

Typischerweise ist der neue Formkörper plattenförmig und weist dann parallel zu seinen Haupterstreckungsrichtungen eine 10 %-Druckfestigkeit von weniger als 10 kPa, vorzugsweise von weniger als 5 kPa auf, so dass er leicht in Gefache eingeformt werden kann. Seine Elastizität ist aber ausreichend, um die Gefache anschließend randschlüssig auszufüllen.

Vorteilhafte Weiterbildungen der Erfindung ergeben sich aus den Patentansprüchen, der Beschreibung und den Ausführungsbeispielen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die an unterschiedlichen Stellen der Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### AUSFÜHRUNGSBEISPIELE

Polypropylenoxide und Copolymere von Ethylenoxid und Propylenoxid, die zur Umsetzung der vorliegenden Erfindung benötigt werden, sind als solche handelsüblich.

Copolymere von Ethylenoxid und Propylenoxid dienen typischerweise als Schmiermittel und sind beispielsweise von der Firma Clariant GmbH, Burgkirchen, Deutschland erhältlich. Bifunktionelle Copolymere aus Ethylenoxid und Propylenoxid werden von der Clariant GmbH als Polyglykole vom D21-Typ angeboten. Dabei bedeutet die Angabe "21", dass das Verhältnis von Ethylenoxid zu Propylenoxid statistisch gesehen 2:1 beträgt. Tetrafunktionelle Copolymere aus Ethylenoxid und Propylenoxid werden von der Clariant GmbH als Polyglycole vom P41-Typ angeboten. Hier bedeutet die Zahl 41 ein Verhältnis von 4:1 zwischen Ethylenoxid und Propylenoxid. Als Polyglycole vom PR-Typ bietet die Firma Clariant GmbH Copolymere aus Ethylenoxid und Propylenoxid mit einem vergleichsweise geringen Anteil an Propylenoxid an, die ebenfalls bei entsprechend hoher Molmasse unter die Definition des Patentanspruchs 1 fallen.

Als für die Durchführung der Erfindung gut geeignetes Copolymer aus Ethylenoxid und Propylenoxid hat sich das Produkt D21/150 der Firma Clariant GmbH herausgestellt. Dieses Copolymer ist bifunktionell und weist eine Molmasse von 2700 auf. Die zweite Zahl 150 der Produktbezeichnung gibt die ungefähre Viskosität des Copolymers bei 50°C in mm²/s an.

Auch das Produkt P41/300 mit einer Molmasse von insgesamt 5000 g/mol wurde erfolgreich zur Umsetzung der Erfindung eingesetzt. Dieses Copolymer ist tetrafunktionell und weist im Mittel eine Molmasse von 1250 g/mol seiner von einer zentralen Verzweigung ausgehenden linearen Abschnitte auf. Die ungefähre Viskosität des Copolymers bei 50°C beträgt 300 mm²/s.

Als Polypropylenoxide sind Produkte aus der PPG-Reihe der Firma Bayer AG, Leverkusen einsetzbar. Konkret wurden die Produkte PPG 1000 und PPG 2000 erfolgreich getestet, wobei die Zahl die Molmasse des jeweiligen Produkts angibt.

Zur Reaktivitätssteigerung bei dem erfindungsgemäßen Verfahren kann ein modifiziertes Propylenoxid-Polyol ("mod. P-P") eingesetzt werden, das ursprünglich als Presszeitverkürzer konzipiert ist.

Als Initiator/Katalysator für die Reaktion der PMDI-Komponente mit der Polyolkomponente kann beispielsweise das kommerziell erhältliche Additiv 9061 der Firma HUNTSMAN, Belgien, erfolgreich eingesetzt werden.

### Herstellung von plattenförmigen Formkörpern

Holzfasern wurden in einem Mischer zuerst mit einer PMDI-Komponente einer für die Holzwerkstoffindustrie üblichen Zusammensetzung und anschließend mit einer Polyolkomponente besprüht. Die Zusammensetzung der Polyolkomponente ist ebenso wie die Menge der PMDI-Komponente in der nachstehenden Tabelle 1 angeführt. Alle Angaben sind in Prozent (%) und beziehen sich auf die Trockenmasse der (atro) Holzfasern. Anschließend wurden die Holzfasern in einen Formkasten überführt, was ab dem Formkörper Nr. 5 durch blasen mit Pressluft erfolgte, woraus eine aufgelockerte Fasermatte resultiert. Soweit nichts anderes angegeben ist, wurde die Fasermatte in eine beheizte Presse überführt. Dabei wurde die Plattendicke durch Distanzstücke eingestellt und lag zwischen 20 und 240 mm. Grundsätzlich sind Formkörper gemäß der vorliegenden Erfindung auch mit noch größerer Dicke herstellbar. Die Aufenthaltsdauer in der Presse, die nicht zum Aufbau von Druck auf die Fasermatte verwendet wurde, betrug gut 10 Minuten, um trotz der schlechten Wärmeleitung eine ausreichende Wärmemenge in die Fasermatte zu übertragen, um dort die gewünschte Reaktion der PMDI-Komponente mit der Polyolkomponente und der Lignocellulose der Holzfasern auszulösen.

Die nachstehende Tabelle 1 gibt die Rezepturen der derart hergestellten Formkörper wieder. Die Dicke- und Dichteangaben wurden angestrebt.

**Tabelle 1**

| Nr. | Holzfaser | PMDI | PEG 200 | PEG 400 | PEG 600 | D21/ 150 | P41/ 300 | PPG 1000 | PPG 2000 | mod. P-P | Add. 9061 | H₂O | Gesamt [%] | Dicke [mm] | Dichte [kg/m³] | Info |
|---|---|---|---|---|---|---|---|---|---|---|---|---|---|---|---|---|
| 1 | 100 | 3,5 | - | - | 3,6 | 0,72 | - | - | - | - | | - | 107,8 | 40 | 60 | 1) |
| 2 | 100 | 3,5 | - | - | 3,6 | 0,72 | - | - | - | - | | - | 107,8 | 80 | 60 | 2) |
| 3 | 100 | 6,0 | - | - | - | 3,60 | - | - | - | - | | - | 109,9 | 80 | 50 | 3) |
| 4 | 100 | 3,5 | - | - | 3,6 | 0,72 | - | - | - | - | | - | 107,8 | 80 | 50 | 4) |
| 5 | 100 | 6,0 | - | - | - | 3,60 | - | - | - | - | | - | 109,9 | 80 | 50 | 5) |
| 6 | 100 | 6,0 | - | - | 2,0 | 2,0 | - | - | - | - | | - | 110,0 | 80 | 50 | 6) |
| 7 | 100 | 6,0 | - | - | 2,0 | 2,0 | - | - | - | - | | - | 110,0 | 80 | 50 | 7) |
| 8 | 100 | 6,0 | 2,0 | - | - | 2,0 | - | - | - | - | | - | 110,0 | 80 | 50 | 8) |
| 9 | 100 | 9,0 | 3,0 | - | - | 3,0 | - | - | - | - | | - | 115,0 | 80 | 50 | 9) |
| 10 | 100 | 5,6 | - | - | 3,6 | 0,72 | - | - | - | - | | - | 109,9 | 80 | 50 | 10) |
| 11 | 100 | 15,0 | - | - | - | - | - | - | - | - | | - | 115,0 | 80 | 50 | 11) |
| 12 | 100 | 12,0 | - | 7,2 | - | 0,8 | - | - | - | - | | - | 120,0 | 80 | 50 | 12) |
| 13 | 100 | 12,0 | - | 7,2 | - | 0,8 | - | - | - | - | | - | 120,0 | 80 | 50 | 13) |
| 14 | 100 | 12,0 | - | 7,2 | - | 0,8 | - | - | - | - | | - | 120,0 | 80 | 30 | 14) |
| 15 | 100 | 12,0 | - | 7,2 | - | 0,8 | - | - | - | - | | - | 120,0 | 240 | 35 | 15) |
| 16 | 100 | 13,6 | - | 8,2 | - | - | 0,9 | - | - | - | | - | 122,7 | 80 | 35 | 16) |
| 17 | 100 | 13,6 | - | 8,2 | - | - | - | 0,4 | - | - | | - | 122,2 | 80 | 35 | 17) |
| 18 | 100 | 13,6 | - | 8,2 | - | - | - | - | 0,8 | - | | - | 122,6 | 80 | 35 | 18) |
| 19 | 100 | 13,6 | - | - | - | 0,9 | - | - | - | 12,3 | | - | 126,8 | 80 | 35 | 19) |
| 20 | 100 | 13,6 | - | - | - | - | - | - | 0,9 | 12,3 | | - | 126,8 | 80 | 35 | 20) |
| 21 | 100 | 13,6 | - | 8,2 | - | 0,9 | - | - | - | - | 0,25 | - | 122,95 | 80 | 35 | 21) |
| 22 | 100 | 13,6 | - | 8,2 | - | 0,9 | - | - | - | - | - | 2,5 | 125,2 | 80 | 35 | 22) |
| 23 | 100 | 13,6 | - | - | - | 0,9 | - | - | - | 12,3 | - | 2,5 | 129,3 | 80 | 35 | 23) |

| | | | | | | | | | | | | | | | | |
|---|---|---|---|---|---|---|---|---|---|---|---|---|---|---|---|---|
| **Info:** 1) Verhältnis grobe zu feinen Fasern 70/30 2) Wie 1) nur dickere Platte 3) 100 % grobe Fasern und geringere Dichte 4) 100 % grobe Fasern 5) Wie 3) nur ab hier immer Faserüberführung von Mischer in Formkasten mittels Luftdruck ⇒ dadurch lockere Fasermatten und keine kugeligen Faseragglomerate mehr, die während des Mischens entstehen 6) 100 % extrem grobe Fasern 7) 80 % extrem grobe und 20% grobe Fasern 8) 100 % feinere Grobfasern und Wasseraufdüsung auf Oberflächen zur Oberflächenverfestigung 9) 100 % feinere Grobfasern und 10 gr. Wasseraufdüsung auf Oberflächen 10) Wie 9) nur 15 gr. Wasseraufdüsung 11) Verhältnis extrem grobe zu feinen Fasern 90/10, kein innerer Halt ⇒ Fehlschlag, trotz 15 % PMDI 12) Verhältnis extrem grobe zu feinen Fasern 90/10 und 15 gr. Wasseraufdüsung 13) 100 % feinere Grobfasern und 15 gr. Wasseraufdüsung 14) 100 % feine Fasern und anstatt angestrebten Dichte von 30 kg/m³ wurden jedoch 22 kg/m³ erreicht 15) 100 % feine Fasern 16) 100 % feine Fasern; P41/300 ersetzt D21/150 17) 100 % feine Fasern; PPG 1000 ersetzt D21/150 18) 100 % feine Fasern; PPG 2000 ersetzt D21/150 19) 100 % feine Fasern; mod. P-P ersetzt PEG 400 20) 100 % feine Fasern; Matte nur mit mod. P-P und PPG 2000 21) 100 % feine Fasern; durch Additivzugabe auch Kaltaushärtung beim PEG 400/D21-System 22) 100 % feine Fasern; durch Wasserzugabe auch Kaltaushärtung beim PEG 400/D21-System 23) 100 % feine Fasern; durch Wasserzugabe ebenfalls Kaltaushärtung bei mod. P-P/D21-Kombination | | | | | | | | | | | | | | | | |

### Anmerkungen:

Mit Ausnahme des Formkörpers 11 hielten alle Formkörper gut zusammen. Die Formkörper mit einem Anteil an PEG 600 (Polyethylenglykol mit einer Molmasse von 600) ergaben Formkörper, die relativ schnell alterten, das heißt nach gewisser Zeit weich und bröselig wurden. Diese Alterungserscheinungen zeigten sich nicht bei Einsatz von PEG 400 (Formkörper 12 bis 18 sowie 21 und 22) und/oder PPG 1000 (Formkörper 17) bzw. PPG 2000 (Formkörper 18 und 20). Die günstigsten Eigenschaften des Formkörpers ergaben sich bei den Formkörpern 14 bis 23, das heißt bei den dazu angeführten Polyolzusammensetzungen in Verbindung mit feinen Fasern.

Bei dem Formkörper 14 und in zusätzlichen Versuchen konnte die mittlere Rohdichte der Formkörper bis auf 22 kg/m³ herabgesetzt werden. Die untere Grenze der Schüttdichte von Holzfasern aus Refineraufschluss liegt bei 10 kg/m³.

Tabelle 2 zeigt die Auswirkung einer Stauchung von neuen Formkörpern auf deren 10 % Druckfestigkeit nach der Stauchung. Obwohl die Dichte nach der Stauchung erhöht ist, geht die Druckfestigkeit nach der Stauchung deutlich zurück.

**Tabelle 2**

| Probe | Bemerkung | 10 % Druckfestigkeit | Dichte nach Stauchung | Dichte vor Stauchung |
|---|---|---|---|---|
| | | [kPa] | [kg/m³] | [kg/m³] |
| Probe 1 | Nullmatte | 8,03 | 28 | 28 |
| Probe 2 | auf 70 % gestaucht | 5,19 | 28 | 24 |
| Probe 3 | auf 50 % gestaucht | 3,96 | 27 | 22 |
| Probe 4 | auf 30 % gestaucht | 4,42 | 36 | 21 |

## Patentansprüche

1. Verfahren zur Herstellung eines Formkörpers auf der Basis von Lignocellulose haltigen Fasern, wobei eine PMDI-Komponente und eine Polyolkomponente auf die Fasern aufgebracht werden und wobei die PMDI-Komponente mit der Polyolkomponente und der Lignocellulose reagiert wird, um die Fasern miteinander zu verbinden, wobei die Polyolkomponente mindestens ein bi-. tri- oder tetrafunktionelles Polymer aufweist, wobei das Polymer ein Polypropylenoxid oder ein Copolymer von Ethylenoxid und Propylenoxid ist und wobei das Polymer mindestens einen linearen Abschnitt mit einer Molmasse von mindestens 800 aufweist,
so dass die PMDI-Komponente und die Polyolkomponente flexible Verbindungen zwischen den Fasern ausbilden, **dadurch gekennzeichnet, dass** eine mittlere Rohdichte des Formkörpers von nicht mehr als 60kg/m³ eingestellt wird.

2. Verfahren nach Anspruch 1, **dadurch gekennzeichnet, dass** das Polymer bifunktionell ist.

3. Verfahren nach Anspruch 1 oder 2, **dadurch gekennzeichnet, dass** jeder lineare Abschnitt des Polymers eine mittlere Molmasse größer als 800, vorzugsweise größer als 1600 aufweist und dass das Copolymer ein Verhältnis von Ethylenoxid zu Propylenoxid von 1:1 bis 5:1, vorzugsweise von 2:1, aufweist.

4. Verfahren nach einem der Ansprüche 1 bis 3, **dadurch gekennzeichnet, dass** die Polyolkomponente ein Gemisch aus dem Polymer und mindestens einem Ethylenoxidpolymer mit einer mittleren Molmasse kleiner als 1000, vorzugsweise kleiner als 500 ist.

5. Verfahren nach einem der Ansprüche 1 bis 4, **dadurch gekennzeichnet, dass** die Reaktionen der PMDI-Komponente mit der Polyolkomponente und der Lignocellulose durch Wärmezufuhr angeregt werden, indem ein angewärmtes Gas durch die mit der PMDI-Komponente und der Polyolkomponente versetzten Fasern geführt wird und dass das angewärmte Gas durch durchbrochene Begrenzungsflächen für die mit der PMDI-Komponente und der Polyolkomponente versetzten Fasern hindurch eingeblasen wird.

6. Verfahren nach einem der Ansprüche 1 bis 5, **dadurch gekennzeichnet, dass** ein Initiator und/oder Katalysator, der eine Reaktion der PMDI-Komponente mit der Polyolkomponente auslöst, der Polyolkomponente und/oder der PMDI-Komponente zugesetzt oder separat auf die Fasern aufgebracht wird und dass die Fasern mit der PMDI-Komponente, der Polyolkomponente und dem Initiator und/oder Katalysator in einen Hohlraum eingeblasen werden, in dem die Reaktion der PMDI-Komponente mit der Polyolkomponente erfolgt.

7. Verfahren nach einem der Ansprüche 1 bis 6, **dadurch gekennzeichnet, dass** der Formkörper nach den Reaktionen der PMDI-Komponente vorübergehend um mindestens 25 %, vorzugsweise um mindestens 50 % seines Ausgangsvolumens gestaucht wird.

8. Verfahren nach einem der Ansprüche 1 bis 7, **dadurch gekennzeichnet, dass** eine mittlere Rohdichte des Formkörpers von nicht mehr als 50 kg/m³, vorzugsweise von nicht mehr als 35 kg/m³ und am meisten bevorzugt von weniger als 30 kg/m³ eingestellt wird.

9. Formkörper auf der Basis von Lignocellulose haltigen Fasern, wobei die Fasern durch Reaktionen einer PMDI-Komponente mit der Lignocellulose und einer Polyolkomponente miteiander verbunden sind, wobei die Polyolkomponente mindestens ein bi-. tri- oder tetrafunktionelles Polymer aufweist, wobei das Polymer ein Polypropylenoxid oder ein Copolymer von Ethylenoxid und Propylenoxid ist und wobei das Copolymer mindestens einen linearen Abschnitt mit einer Molmasse von mindestens 800 aufweist, und wobei die PMDI-Komponente und die Polyolkomponente flexible Verbindungen zwischen den Fasern ausbilden, **dadurch gekennzeichnet, dass** der Formkörper eine mittlere Rohdichte von nicht mehr als 60kg/m³ aufweist.

10. Formkörper nach Anspruch 9, **dadurch gekennzeichnet, dass** das Copolymer bifunktionell ist.

11. Formkörper nach Anspruch 9 oder 10, **dadurch gekennzeichnet, dass** jeder lineare Abschnitt des Copolymers eine mittlere Molmasse größer als 800, vorzugsweise größer als 1600 aufweist und dass das Copolymer ein Verhältnis von Ethylenoxid zu Propylenoxid von 1:1 bis 5:1, vorzugsweise von 2:1, aufweist.

12. Formkörper nach einem der Ansprüche 9 bis 11, **dadurch gekennzeichnet, dass** die Polyolkomponente ein Gemisch aus dem Polymer und mindestens einem Ethylenoxidpolymer mit einer mittleren Molmasse kleiner als 1000, vorzugsweise kleiner als 500 ist.

13. Formkörper nach einem der Ansprüche 9 bis 12, **dadurch gekennzeichnet, dass** der Formkörper offenporig ist.

14. Formkörper nach einem der Ansprüche 9 bis 13, **dadurch gekennzeichnet, dass** der Formkörper eine mittlere Rohdichte von nicht mehr als 50 kg/m³, vorzugsweise von nicht mehr als 35 kg/m³ und am meisten bevorzugt von weniger als 30 kg/m³ aufweist.

15. Formkörper nach einem der Ansprüche 9 bis 14, **dadurch gekennzeichnet, dass** der plattenförmige Formkörper parallel zu seinen Haupterstreckungsrichtungen eine 10 %-Druckfestigkeit von weniger als 10 kPa, vorzugsweise von weniger als 5 kPa aufweist.

## Claims

1. A method for producing a moulded article based on lignocellulose-containing fibres, wherein a PMDI-component and a polyol-component are applied to the fibres, and wherein the PMDI-component is reacted with the polyol-component and the lignocellulose to connect the fibres, wherein the Polyol-component comprises at least a bi-, tri- or tetra-functional polymer, wherein the Polymer is a polypropylene oxide or a co-polymer of ethylene oxide and propylene oxide, and wherein the polymer comprises at least a linear section having a molar mass of at least 800, such that the PMDI-component and the polyol-component form flexible connections between the fibres, **characterized in that** an average raw density of the moulded article of not more than 60 kg/m³ is adjusted.

2. The method of claim 1, **characterized in that** the polymer is bi-functional.

3. The method of claim 1 or 2, **characterized in that** each linear section of the polymer has an average molar mass higher than 800, preferably higher than 1600, and that the copolymer comprises a ratio of ethylene oxide to propylene oxide in a range from 1:1 to 5:1, preferably of 2:1.

4. The method of any of the claims 1 to 3, **characterized in that** the polyol-component is a mixture of a polymer and at least one ethylene oxide polymer having an average molar mass lower than 1000, preferably lower than 500.

5. The method of any of the claims 1 to 4, **characterized in that** the reactions of the PMDI-component with the polyol-component and the lignocellulose are initiated by application of heat in that a warmed-up gas is passed through the fibres to which the PMDI-component and the polyol-component have been added, and that the warmed-up gas is blown through openings in a boundary surface for the fibres to which the PMDI-component and the polyol-component have been added.

6. The method of any of the claims 1 to 5, **characterized in that** an initiator and/or catalyst which initiates an reaction of the PMDI-component with the polyol-component is added to the polyol-component and/or to the PMDI-component or separately applied to the fibres, and that the fibres together with the PMDI-component, the polyol-component and the initiator and/or catalyst are blown into a cavity in which the reaction of the PMDI-component with the polyol-component takes place.

7. The method of any of the claims 1 to 6, **characterized in that** the moulded article is temporarily compressed by at least 25 %, preferably by at least 50 %, of its initial volume after the reaction of the PMDI-component.

8. The method of any of the claims 1 to 7, **characterized in that** an average raw density of the moulded article of not more than 50 kg/m³, preferably of not more than 35 kg/m³ and most preferably of not more than 30 kg/m³ is adjusted.

9. A moulded article based on lignocellulose-containing fibres, wherein the fibres are connected by reactions of an PMDI-component with the lignocellulose and a polymer-component, wherein the polyol-component comprises at least one bi-, tri- or tetra-functional polymer, wherein the polymer is a polypropylene oxide or a copolymer of ethylene oxide and propylene oxide, and wherein the copolymer comprises at least one linear section having a molar mass of at least 800, and wherein the PMDI-component and the polyol-component form flexible connections between the fibres, **characterized in that** the moulded article comprises an average raw density of not more than 60 kg/m³.

10. The moulded article of claim 9, **characterized in that** the copolymer is bi-functional.

11. The moulded article of claim 9 or 10, **characterized in that** each linear section of the copolymer comprises an average molar mass higher than 800, preferably higher than 1600, and that the copolymer comprises a ratio of ethylene oxide to propylene oxide in a range from 1:1 to 5:1, preferable of 2:1.

12. The moulded article of any of the claims 9 to 11, **characterized in that** the polyol-component is a mixture of the polymer and at least one ethylene oxide polymer having an average molar mass lower than 1000, preferably lower than 500.

13. The moulded article of any of the claims 9 to 12, **characterized in that** the moulded article is open-pored.

14. The moulded article of any of the claims 9 to 13, **characterized in that** the moulded article has an average raw density of not more than 50 kg/m³, preferably of not more than 35 kg/m³ and most preferably of less than 30 kg/m³.

15. The moulded article of any of the claims 9 to 14, **characterized in that** the plate-shaped moulded article displays a 10% compressive resistance in parallel to its directions of main extensions of less than 10 kPa, preferably of less than 5 kPa.

## Revendications

1. Procédé de fabrication d'un corps moulé à base de fibres contenant de la lignocellulose, un composant PMDI et un composant polyol étant appliqués sur les fibres et le composant PMDI étant mis en réaction avec le composant polyol et la lignocellulose pour lier les fibres les unes aux autres, sachant que le composant polyol comporte au moins un polymère bi-, tri- ou tétrafonctionnel, le polymère étant un poly(oxyde de polypropylène) ou un copolymère d'oxyde d'éthylène et d'oxyde de propylène et le polymère comportant au moins un tronçon linéaire avec une masse molaire d'au moins 800, de telle sorte que le composant PMDI et le composant polyol forment des liaisons flexibles entre les fibres, **caractérisé en ce qu'**une densité brute moyenne du corps moulé de pas plus de 60 kg/m³ est ajustée.

2. Procédé selon la revendication 1, **caractérisé en ce que** le polymère est bifonctionnel.

3. Procédé selon la revendication 1 ou 2, **caractérisé en ce que** chaque tronçon linéaire du polymère présente une masse molaire moyenne de plus de 800, de préférence de plus de 1600, et **en ce que** le copolymère présente un rapport de l'oxyde d'éthylène à l'oxyde de propylène compris ente 1 : 1 et 5 : 1, de préférence de 2 : 1.

4. Procédé selon l'une quelconque des revendications 1 à 3, **caractérisé en ce que** le composant polyol est un mélange du polymère et d'au moins un polymère d'oxyde d'éthylène avec une masse molaire moyenne inférieure à 1000, de préférence inférieure à 500.

5. Procédé selon l'une quelconque des revendications 1 à 4, **caractérisé en ce que** les réactions du composant PMDI avec le composant polyol et la lignocellulose sont suscitées par apport de chaleur, un gaz réchauffé étant envoyé à travers les fibres additionnées du composant PMDI et du composant polyol et le gaz réchauffé étant insufflé pour les fibres additionnées du composant PMDI et du composant polyol à travers des surfaces de limitation perforées.

6. Procédé selon l'une quelconque des revendications 1 à 5, **caractérisé en ce qu'**un initiateur et/ou un catalyseur qui déclenche une réaction du composant PMDI avec le composant polyol est ajouté au composant polyol et/ou au composant PMDI ou est déposé séparément sur les fibres et **en ce que** les fibres sont insufflées avec le composant PMDI, le composant polyol et l'initiateur et/ou le catalyseur dans une cavité dans laquelle s'effectue la réaction du composant PMDI avec le composant polyol.

7. Procédé selon l'une quelconque des revendications 1 à 6, **caractérisé en ce qu'**après les réactions du composant PMDI, le corps moulé est temporairement comprimé d'au moins 25 %, de préférence d'au moins 50 % de son volume initial.

8. Procédé selon l'une quelconque des revendications 1 à 7, **caractérisé en ce qu'**une densité brute moyenne du corps moulé de pas plus de 50 kg/m³, de préférence de pas plus de 35 kg/m³, de façon particulièrement préférée de pas plus de 30 kg/m³ est ajustée.

9. Corps moulé à base de fibres contenant de la lignocellulose, les fibres étant liées les unes aux autres par des réactions d'un composant PMDI avec la lignocellulose et un composant polyol, sachant que le composant polyol comporte au moins un polymère bi-, tri- ou tétrafonctionnel, le polymère étant un poly(oxyde de polypropylène) ou un copolymère d'oxyde d'éthylène et d'oxyde de propylène et le polymère comportant au moins un tronçon linéaire avec une masse molaire d'au moins 800, et sachant que le composant PMDI et le composant polyol forment des liaisons flexibles entre les fibres, **caractérisé en ce que** le corps moulé présente une densité brute moyenne de pas plus de 60 kg/m³.

10. Corps moulé selon la revendication 9, **caractérisé en ce que** le copolymère est bifonctionnel.

11. Corps moulé selon la revendication 9 ou 10, **caractérisé en ce que** chaque tronçon linéaire du copolymère présente une masse molaire moyenne supérieure à 800, de préférence supérieure à 1600, et **en ce que** le copolymère présente un rapport de l'oxyde d'éthylène à l'oxyde de propylène compris entre 1 : 1 et 5 : 1, de préférence de 2 : 1.

12. Corps moulé selon l'une quelconque des revendications 9 à 11, **caractérisé en ce que** le composant polyol est un mélange du polymère et d'au moins un polymère d'oxyde d'éthylène avec une masse molaire moyenne inférieure à 1000, de préférence inférieure à 500.

13. Corps moulé selon l'une quelconque des revendications 9 à 12, **caractérisé en ce que** le corps moulée est à pores ouverts.

14. Corps moulé selon l'une quelconque des revendications 9 à 13, **caractérisé en ce que** le corps moulé présente une densité brute moyenne de pas plus de 50 kg/m³, de préférence de pas plus de 35 kg/m³ et façon particulièrement préférée de pas plus de 30 kg/m³.

15. Corps moulé selon l'une quelconque des revendications 9 à 14, **caractérisé en ce que** le corps moulé en forme de plaque présente parallèlement à ses directions d'extension principales une résistance à la compression de moins de 10 kPa, de préférence de moins de 5 kPa.
